# EUROPÄISCHE PATENTSCHRIFT

(11) **EP 0 681 536 B1**
(45) Veröffentlichungstag und Bekanntmachung des Hinweises auf die Patenterteilung: **11.06.1997**
(21) Anmeldenummer: 94905715.2
(22) Anmeldetag: 27.01.1994
(51) Int. Cl.: B60R 21/16

(54) **AIRBAG UND VERFAHREN ZU SEINER HERSTELLUNG**
AIRBAG AND MANUFACTURING METHOD THEREFOR
AIRBAG ET SON PROCEDE DE FABRICATION

(30) Priorität: 02.02.1993 DE 4302904; 21.12.1993 DE 4343738
(43) Veröffentlichungstag der Anmeldung: 15.11.1995
(73) Patentinhaber: Berger, Johann, D-73553 Alfdorf (DE)
(72) Erfinder: BERGER, Johann, D-73553 Alfdorf (DE); FOEHL, Artur, D-73614 Schorndorf (DE)
(74) Vertreter: Lehmann, Klaus, Dipl.-Ing.
(86) Internationale Anmeldenummer: EP9400222
(87) Internationale Veröffentlichungsnummer: WO9418033

(56) Entgegenhaltungen:
- DE-A- 4 126 709
- FR-A- 2 129 015
- FR-A- 2 167 652
- US-A- 4 169 613

## Beschreibung

Die Erfindung bezieht sich auf einen Airbag unterschiedlicher Formen, der dadurch hergestellt wird, daß aus einer Bahn aus Textilmaterial oder Kunststoff- Folie ein Materialstück, "Zuschnitt", herausgeschnitten wird, und daß dessen Ränder dann miteinander verbunden werden. Unter "verbinden" ist in erster Linie ein Nähvorgang zu verstehen, sofern es sich um Textilmaterial handelt. Bei Kunststoff- Folie und auch bei Textilmaterial sind zum Verbinden auch Klebe- und Schweißvorgänge anwendbar. In der Figurenbeschreibung wird weitgehend von Textilmaterial und Nähvorgängen gesprochen, ohne daß die Erfindung darauf aber beschränkt werden soll.

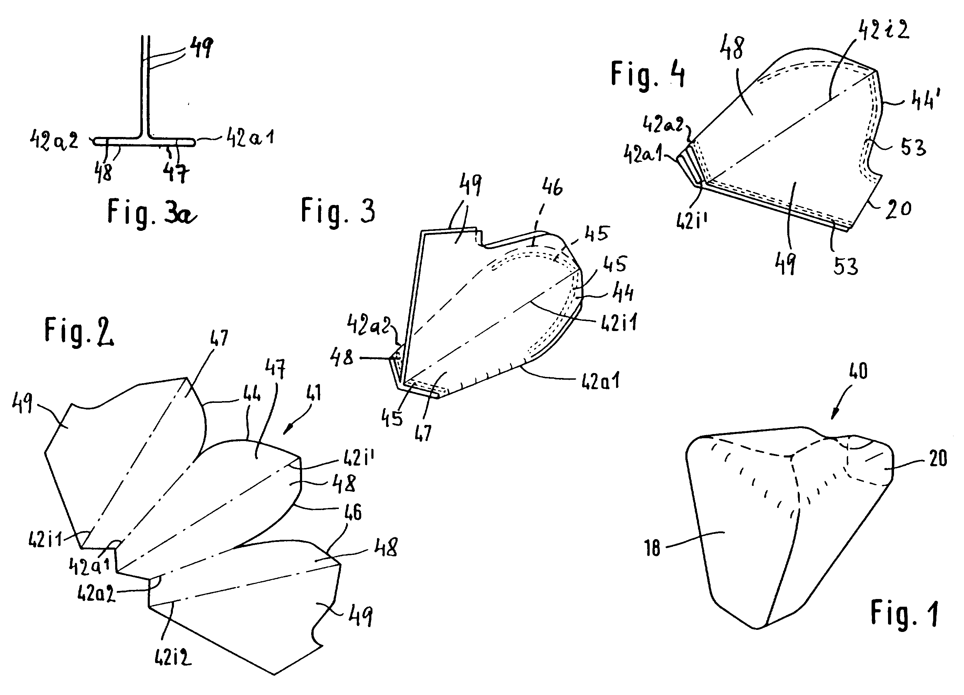

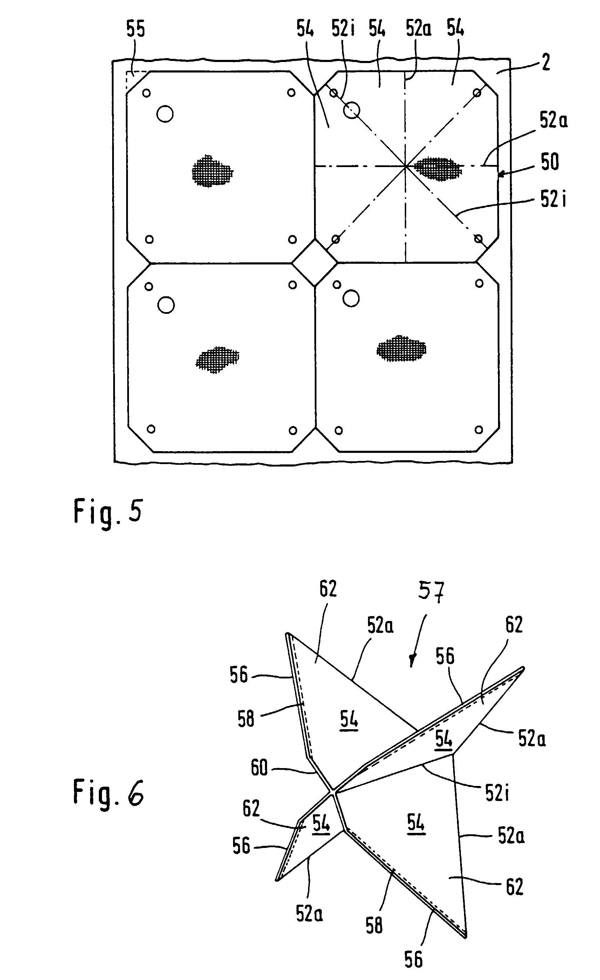

Nach der Erfindung sollen Airbags größerer Tiefe herstellbar sein, insbesondere kubische oder birnenförmige Airbags, wie man sie vor allem für die Beifahrerseite benötigt. Solche Airbags werden bekanntermaßen durch Zusammennähen eines vorderen und eines hinteren Stoffabschnitts mit einem rundum laufenden Mantelteil erzeugt. Aus der DE,A,24 39 222 (Ballonfabrik), Figur 4 und 5 dort, ist es darüber hinaus bekannt, zur Herstellung eines etwa birnenförmigen Airbags einen relativ großen, rundum laufenden Ausschnitt zu verwenden, der einzelne nach außen vorstehende Zacken hat, die miteinander vernäht werden. Will man eine Anhäufung von Nähten oder Klebungen an der Stoßstelle der Zacken vermeiden, so müssen die Spitzen der Zacken bogenförmig ausgeschnitten werden und dann beiderseits mit je einem kreisförmigen Deckblatt verbunden werden. In diesem Falle benötigt man also drei Stoffteile zur Fertigung des Airbags.

Durch die Schrift US,A,4,169,613 (Barnett) ist es bekannt geworden, bei der Herstellung eines Airbags einen Zuschnitt um Faltkanten in einander dicht benachbarte, parallele Ebenen zu falten, wobei die Faltkanten den Zuschnitt vollständig durchqueren. Hierbei sind jeweils zwei Abschnitte des Zuschnitts zu einer Außenfaltkante spiegelbildlich und haben nach dem Falten in übereinanderliegende Ebenen übereinanderliegende, miteinander zu verbindende Ränder. Innenfaltkanten und Außenfaltkanten wechseln einander ab. Nach Barnett lassen sich Airbags herstellen, die über ihre Länge einen gleichbleibenden Querschnitt haben, wie man sie speziell auf der Fahrerseite verwenden kann.

Durch die vorliegende Erfindung soll ein Airbag geschaffen werden, der eine beliebige, gewünschte Form, vor allem auch großer Tiefe, haben kann und zu dessen Herstellung möglichst wenig Verbindungs- , insbesondere Nähvorgänge erforderlich sind.

Die genannte Aufgabe läßt sich in zwei Varianten nach Anspruchen 1 oder 2 lösen. Bei beiden Varianten schließen einander benachbarte Faltkanten miteinander spitze Winkel ein. Infolgedessen lassen sich die Abschnitte so falten, daß eine Art Schirmgebilde entsteht, dessen Außenkanten ein leichtes Verbinden, insbesondere Vernähen ermöglichen. Aufgeblasen ergibt sich ein Airbag erheblicher Größe. Die Form des Airbags läßt sich durch Wahl von Abschnitten unterschiedlicher Formen und Größen sehr stark variieren. Während der Zuschnitt vorzugsweise einstückig ist, ließe er sich auch aus z. B. zwei Abschnitten zusammennähen, was speziell bei sehr komplizierten Formen zweckmäßig sein kann.

Aus der DE, A, 25 25 440 (Nissan) ist es bekannt, bei einem quadratischen Zuschnitt nur in dessen Ecken drei Faltkanten vorzusehen, von denen einen diagonal, die beiden anderen parallel zu den Seitenrändern verlaufen: Hier sind zur Bildung des Airbags zwei derartige Zuschnitte erforderlich und ein relativ komplizierter Faltvorgang, während nach der vorliegenden Erfindung ein einziger, insbesondere einstückiger Zuschnitt ausreicht, und die Faltvorgänge sehr einfach sind.

### Weiterbildungen der Erfindung

Der Zuschnitt kann im wesentlichen die Form eines Quadrats oder eines Rechtecks haben, wobei zur Bildung eines Hohlraums größerer Tiefe die Seitenkanten des Quadrats oder Rechtecks eingezogen werden können.

Die Erfindung bezieht sich ferner auf ein Verfahren zum Herstellen eines Airbags, der mehr als zwei der oben erwähnten Abschnitte hat. Der Zuschnitt wird zu einem Gebilde nach Art eines geschlossenen Schirmes (Sonnenschirm, Regenschirm) gefaltet, das hier als "Schirmgebilde" bezeichnet wird. Bei diesem Schirmgebilde entsprechen den Stäben des Schirmes die Innenfaltkanten, während die Außenfaltkanten den Außenrändern der Stoffteile des Schirmes entsprechen, die zwischen zwei Stäben nach außen wegstehen. Zum Nähen werden jeweils zwei Abschnitte beiderseits einer Außenfaltkante eben aufeinander gelegt. Die freien Ränder dieser beiden Abschnitte, die dem Stoffrand des Schirmes entsprechen, werden dann in einer Ebene miteinander vernäht, und zwar jeweils für die beiden einer Außenfaltkante benachbarten Abschnitte, dann die beiden Abschnitte, die einer anderen Außenfaltkante benachbart sind usw.. Es können auch gleichzeitig vier Abschnitte in eine Ebene gelegt werden, nämlich die Abschnitte, die zu zwei einander benachbarten Außenfaltkanten gehören. Man kann dann also in einer Ebene vier Abschnitte miteinander vernähen. Verwendet man zum Nähen eine Robotereinrichtung, so kann man alle Abschnitte gleichzeitig miteinander vernähen.

Die Bahn, aus der die Zuschnitte für die Airbags herauszuschneiden sind, kann in bekannter Weise Löcher zum Gasaustritt haben, vorzugsweise aber gasdurchlässige Zonen, nämlich Zonen, die aus einem stärker gasdurchlässigen Material bestehen als der Rest der Bahn. Bekannt ist dieses Prinzip aus der DE,A,41 26 709 (Akzo). Die Zonen können in der Bahn so angeordnet werden, daß sie bei dem fertigen Airbag an Stellen außerhalb der dem Insassen zuzukehrenden Fläche (der "Aufprallfläche") liegen. Der Gasaustritt stört dann den Insassen nicht. Die gasdurchlässigen Zonen können nach einer anderen Weiterbildung der vorliegenden Erfindung in Bahnlängs- oder querrichtung verlaufende Streifen sein.

Besonders vorteilhaft ist eine Anordnung, bei der die Bahn in ihrer Längsrichtung kleinere gasdurchlässige Zonen hat, von denen mehr als eine, z. B. vier oder fünf, in Bahnlängsrichtung in eine Zuschnittsfläche passen. Hat man in der Bahn einen Fehler, insbesondere einen Webfehler erkannt, so genügt es, gegenüber der letzten fehlerfreien Zuschnittsfläche die nächste nur so weit zu versetzen, wie es gerade nötig ist und zwar soweit, daß gasdurchlässige Zonen der gewünschten Anzahl in eine Zuschnittsfläche passen.

Ausführungsbeispiele mit weiteren Merkmalen der Erfindung werden im folgenden anhand der Zeichnungen beschrieben.
- Figur 1: zeigt perspektivisch einen voluminösen Airbag in unsymmetrischer Birnenform.
- Figur 2: zeigt perspektivisch den zugehörigen Zuschnitt.
- Figur 3: zeigt perspektivisch den gefalteten Zuschnitt.
- Figur 3a: zeigt in Stirnansicht den nach Figur 3 gefalteten Zuschnitt.
- Figur 4: zeigt perspektivisch den in einer anderen Weise gefalteten Zuschnitt.
- Figur 5: zeigt eine Bahn mit vier Zuschnitten von annähernd quadratischer Form.
- Figur 6: zeigt perspektivisch ein aus einem dieser Zuschnitte gefaltetes Schirmgebilde.
- Figur 7: zeigt eine Bahn mit Zuschnitten, die gegenüber einem Quadrat eingezogene Seitenkanten haben.
- Figuren 8 und 9: zeigen den in anderen Weisen gefalteten Zuschnitt perspektivisch.
- Figuren 10 und 11: zeigen den fertigen Airbag in Seitenansicht bzw. perspektivisch.
- Figuren 12 bis 14: zeigen Gewebebahnen mit gegeneinander verschachtelten Zuschnittsflächen gleicher Formen und mit gasdurchlässigen Zonen unterschiedlicher Formen.
- Figuren 15 und 16: zeigen Gewebebahnen mit aufeinanderfolgenden gleichen Zuschnittsflächen und gasdurchlässigen Zonen.
- Figuren 17 und 18: zeigen das gleiche, jedoch mit gasdurchlässigen Zonen unter gegenseitigen Abständen in Bahnlängsrichtung, die kleiner sind als der Rapport.

Figur 1 zeigt einen birnenförmigen Airbag 40 mit seiner dem Beifahrer zuzukehrenden Aufprallfläche 18 und seiner Anschlußöffnung 20 für einen Gasgenerator rechts hinten. Der Airbag hat eine unsymmetrische Form. Unsymmetrische Airbags lassen sich besser der Innenstruktur eines Fahrzeuges anpassen, also der Beifahrerseite, dem Raum zwischen Insassen, Armaturenbrett, Windschutzscheibe und der A- Säule (die A- Säule ist die vorne rechts an der Windschutzscheibe). Zur Herstellung dieses Airbags dient ein Zuschnitt 41, der in Figur 2 perspektivisch dargestellt ist.

Der Zuschnitt hat Faltkanten 42il, 42al, 42i', 42a2 und 42i2, die unter spitzen Winkeln zueinander verlaufen. Nähränder 44 beiderseits der Faltkante 42al haben zueinander spiegelbildliche Formen. Ebenso haben die Nähränder 46 beiderseits der Faltkante 42a2 zueinander spiegelbildliche Formen, die aber von denen der Nähränder 44 abweichen.

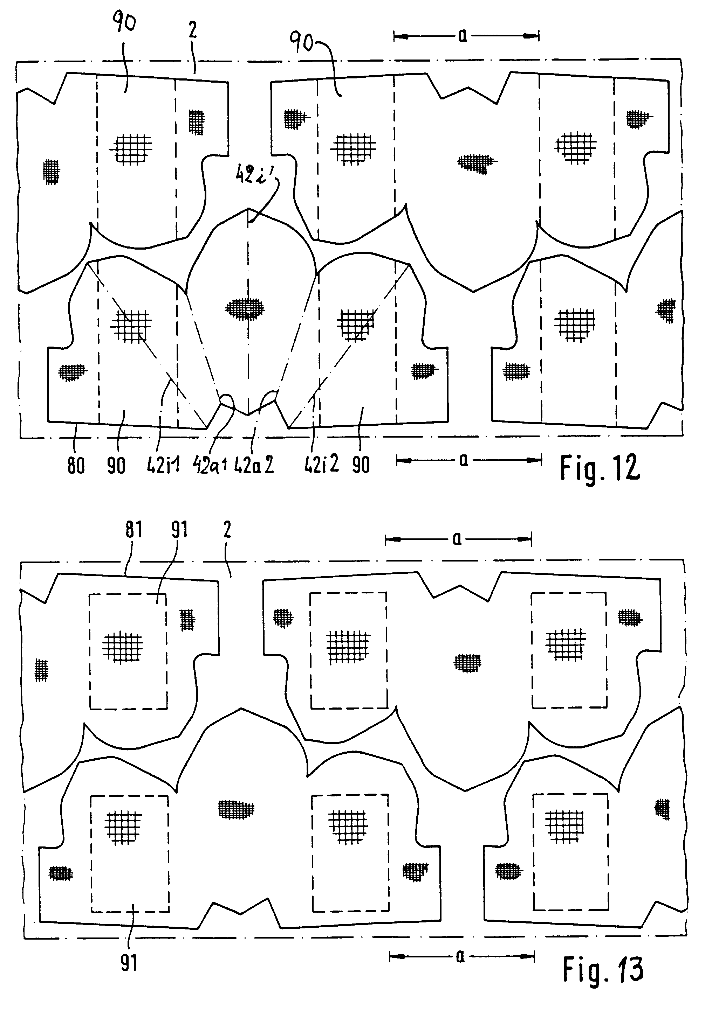

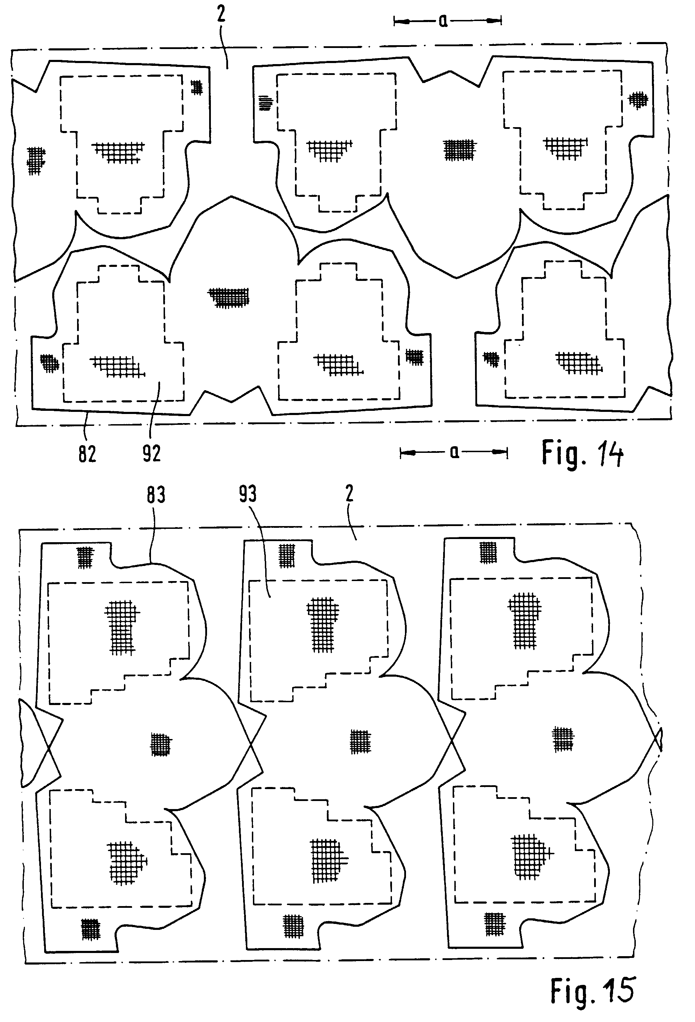

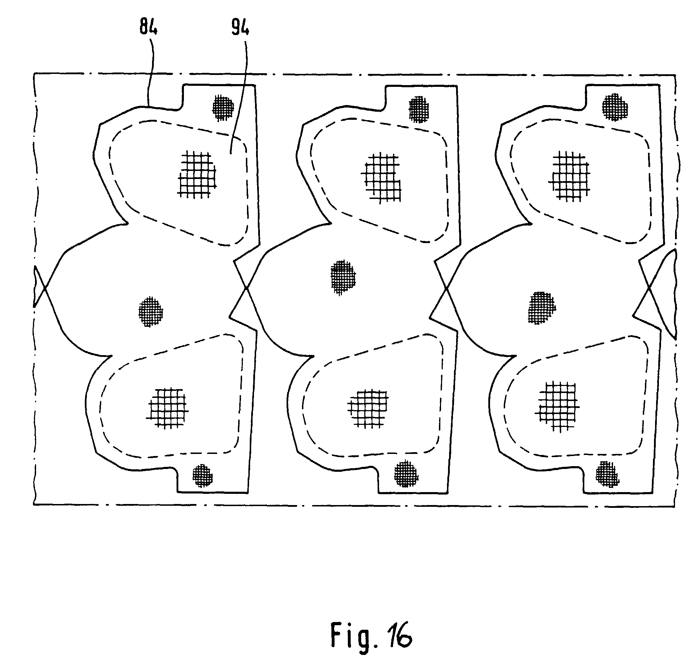

Durch Falten nach Figur 3 und 3a werden Abschnitte 47 auf spiegelbildliche Abschnitte 47, also Abschnitte gleicher Größe und spiegelbildlicher Form gelegt, während zueinander spiegelbildliche Abschnitte 49 nach oben wegstehen. Es werden nun längs Nährändern 44 und 46 Nähte 45 erzeugt, wodurch die beiden Abschnitte 47 miteinander und die beiden Abschnitte 48 miteinander verbunden werden. Wie oben ausgeführt, können anstelle von Nähvorgängen andere Verbindungsvorgänge angewandt werden, z. B. Verschweißen oder Verkleben, was bei Textilmaterial ebenfalls anwendbar ist, insbesondere aber Bedeutung für den Fall hat, daß Kunststoff- Folien anstelle von Textilmaterial verwendet werden. Das soweit entstandene Gebilde wird dann nach Figur 11 gefaltet, wobei zwischen den Abschnitten 48 und 49 eine innere Faltkante 42i2 entsteht. Die beiden Abschnitte 49 werden eben aufeinander gelegt, und ihre Nähränder 44' werden dann miteinander vernäht (Nähte 53), jedoch so, daß die Anschlußöffnung 20 freibleibt.

Man kann auch umgekehrt vorgehen, nämlich zunächst nach Figur 4 falten, die Nähte 53 herstellen und dann erst nach Figur 3 und 3a falten und die Nähte 45 erzeugen.

Wie Figur 5 zeigt, lassen sich aus einer Bahn, insbesondere Gewebebahn 2, Zuschnitte 50 in Form von Quadraten mit abgeschnittenen Ecken herstellen. Diese Zuschnitte erhalten innere Faltkanten 52i längs ihrer Diagonalen und äußere Faltkanten 52a parallel zu den Quadratkanten. Alle Faltkanten durchqueren die Zuschnittsfläche vollständig, also über ihre ganze Länge, Höhe oder Diagonale. Durch die Faltkanten werden Abschnitte 54 gebildet, die sowohl hinsichtlich der Faltkanten 52i als auch hinsichlich der Faltkanten 52a zueinander spiegelbildlich sind. Bei anderen Formen genügt es, wenn die Abschnitte z. B. beiderseits je einer äußeren Faltkante zueinander spiegelbildlich sind, während sie beiderseits einer inneren Faltkante unterschiedliche Formen haben. Dies ergibt sich z. B., wenn man anstelle eines Quadrats ein Rechteck als Grundform verwendet.

Wird der Zuschnitt 50 vollständig um alle Faltkanten gefaltet, so ergibt sich ein Gebilde nach Figur 6, das hier in symmetrischer Anordnung perspektivisch dargestellt ist. Man erkennt hier alle äußeren Faltkanten 52a und eine der vier inneren Faltkanten 52i. Es ergeben sich vier Nähränder 56, an denen nacheinander die vier Nähte 58 hergestellt werden. Das kreuzartige Gebilde vorn links dient zur Bildung der Anschlußöffnung 60. Hier wird nicht vernäht, und beim Erweitern des Gebildes ergibt sich hier die Anschlußöffnung für den Gasgenerator.

Das Gebilde nach Figur 6 ähnelt einem geschlossenen Schirm, dessen Spitze rechts (hinten) liegt und wird daher als "Schirmgebilde" bezeichnet. Den Stäben des geschlossenen Schirmes entsprechen die inneren Faltkanten 52i, während die äußeren Faltkanten 52a beim Schirm durch die nach außen stehenden Stoffteile gebildet werden. Die Nähränder 56 werden beim Schirm durch die freien Stoffränder gebildet.

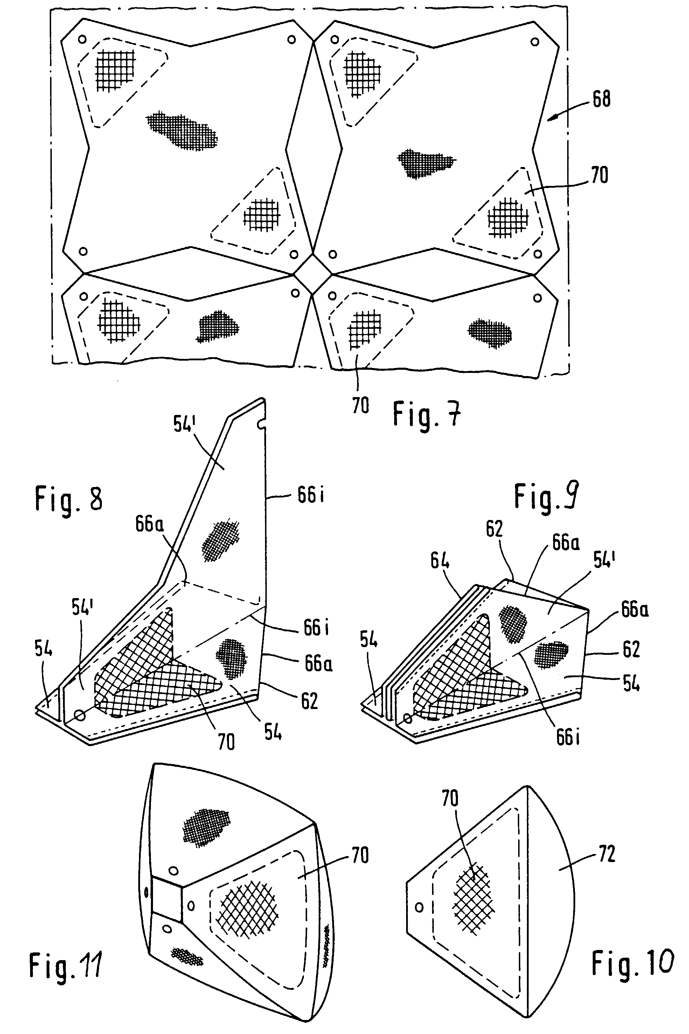

Zum Vernähen braucht man nur jeweils einen der vier Flügel 62 in eine Ebene zu legen, die Naht 58 herzustellen, dann einen anderen der vier Flügel zu nähen usw.. Figur 9 zeigt, daß man zum Nähen zwei der Flügel 62 in eine gemeinsame Ebene bringt, während die beiden anderen Flügel mit Abschnitten 54' nach oben wegstehen. Figur 8 zeigt, daß man auch anders vorgehen kann. Auch hier liegen zwei Flügel in einer Ebene zum Vernähen, während die anderen beiden noch nicht gebildet sind. Vielmehr steht das Material hier noch ungefaltet nach oben. Die Faltkante 66i rechts in Fig. 8, die eigentlich eine Innenfalte des Schirmgebildes ist, fungiert hier vorübergehend als Außenfaltkante. Entsprechendes gilt für Schirmgebilde mit mehr als vier Flügeln.

Die Figuren 10 und 11 zeigen den fertigen Airbag in Seitenansicht bzw. perspektivisch.

Während Figur 6 ein Schirmgebilde mit vier Flügeln 62 zeigt, dessen Nähkanten 56 gerade sind, lassen sich auch Schirmgebilde anderer Art herstellen, z. B. solche mit nur drei Flügeln oder fünf oder mehr Flügeln. Die Nähkanten 56 brauchen auch keine Geraden zu sein, sondern können z. B. nach außen gekrümmt sein, wodurch sich ein größerer Hohlraum ergibt. Eine andere Variante zeigen die Figuren 7 bis 11. Hier sind die Seitenkanten der Quadrate eigezogen. Es wurden nämlich stumpfwinklige Dreieckstücke weggeschnitten. Es ergibt sich ein Airbag nach Figur 10 und 11 von zwar kleinerem Volumen aber größerer Tiefe als ein Airbag, der aus einem Zuschnitt nach Figur 5 hergestellt wird.

Die Figuren 12 bis 18 zeigen Gewebebahnen 2 mit Zuschnittsflächen, die alle dem Zuschnitt 41 aus Figur 2 entsprechen. Nur in Figur 12 sind in eine der Zuschnittsflächen die inneren und äußeren Faltkanten 42il, 42a1, 42i', 42a2, 42i2 eingezeichnet.

In allen Gewebebahnen sind gasdurchlässige Zonen vorgesehen, die hier stellenweise durch eine weite Schraffur dargestellt sind, während die übrigen Bestandteile der Zuschnittsflächen aus einem dichten Gewebe bestehen, das hier durch eine enge Kreuzschraffur stellenweise dargestellt ist. Es können das dichte Gewebe in Leinwandbindung, die gasdurchlässigen Zonen in einer Köperbindung gewebt werden.

Nach Figur 12 bis 14 sind die Zuschnittsflächen 90, 91, 92 in zwei parallelen Reihen innerhalb der Bahn 2 angeordnet, und zwar gegeneinander verschachtelt, so daß möglichst wenig Abfall beim Ausschneiden entsteht.

Nach Figur 12 sind gasdurchlässige Streifen 90 vorgesehen, die über die ganze Bahnbreite verlaufen. Mit einer Schaftwebmaschine läßt sich erreichen, daß im Hauptteil des Bandes ein dichtes Gewebe, z. B. in Leinwandbindung hergestellt wird, während in den gasdurchlässigen Zonen 90 ein durchlässigeres Gewebe, z. B. in einer Köperbindung hergestellt wird. Wie man sieht, stimmen die gasdurchlässigen Zonen in Figur 12 für die gegeneinander versetzt angeordneten Zuschnittsflächen miteinander überein, laufen also in Figur 12 von oben nach unten, also über die Bahnbreite unverändert durch.

Ein Nachteil dieser Anordnung liegt darin, daß zum Teil in weniger festem Gewebe genäht werden muß. Dieser Nachteil wird nach Figur 13 dadurch behoben, daß die gasdurchlässigen Zonen 91 dort so innerhalb der Zuschnittsfläche 80 angeordnet sind, daß sie nicht an deren Ränder reichen. Man hat dann also ein festes Gewebe ausreichender Breite zum Vernähen.

Nach Figur 13 haben die gasdurchlässigen Zonen die Form von Rechtecken, was sich mit einer Schaftwebmaschine herstellen läßt. Wesentlich ist, daß nach Figur 12, 13 und 14 gleiche Abstände a innerhalb des Zuschnittes den Abstand zwischen zwei gasdurchlässigen Zonen bestimmen. Die Ränder der gasdurchlässigen Zonen haben von einem Zuschnitt zum anderen ebenfalls Abstände a, wie man unten in Figur 12 bis 14 erkennt. Dies führt zu einer vereinfachten Steuerung der Schaftwebmaschine.

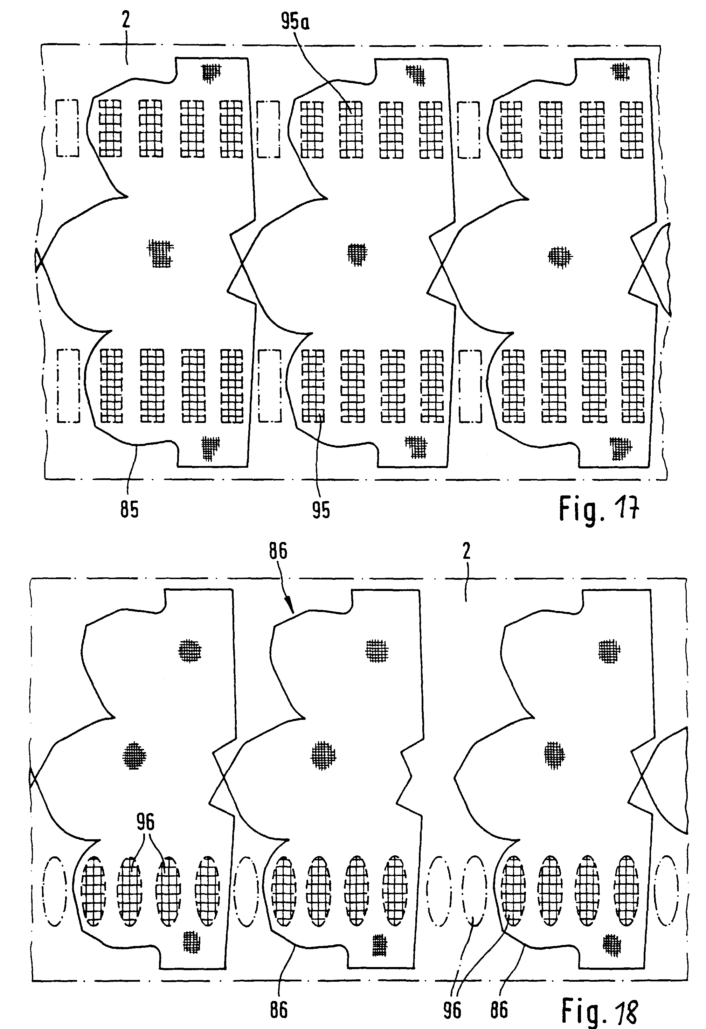

Figur 14 zeigt eine ähnliche Anordnung wie Figur 13, bei der jedoch die gasdurchlässigen Zonen 92 der Form der Zuschnittsfläche besser angepaßt sind. Hierdurch kann man den zur Verfügung stehenden Raum weitgehend nutzen. Auch die gasdurchlässige Zone 92 läßt sich mit Hilfe einer Schaftwebmaschine, z. B. in Köperbindung, herstellen.

Die Figuren 15 bis 18 zeigen eine andere Anordnung. Hier sind die Zuschnittsflächen 83 bis 86 hintereinander in Bahnlängsrichtung angeordnet, und zwar so weit wie möglich platzsparend. Die gasdurchlässigen Zonen 93 in Fig. 15 sind, ähnlich wie in Figur 14, der Form der Zuschnittsfläche weitgehend angepaßt und lassen sich mit einer Schaftwebmaschine herstellen.

Figur 16 zeigt Zuschnittsflächen 84, bei denen die Formen der gasdurchlässigen Zonen 94 noch weitgehend besser angepaßt sind. Hier ist zum Weben allerdings eine Jacquard- Einrichtung erforderlich. Man hat hier den Vorteil, daß die Form der gasdurchlässigen Zonen der Zuschnittsform ideal gut angepaßt werden kann, muß dafür aber den Nachteil in Kauf nehmen, daß eine Jacquard- Einrichtung verwendet werden muß, die kostspieliger ist als eine Schaftmaschine. Ferner dauert der Webvorgang länger als bei einer Schaftmaschine. Man muß also abwägen, ob nicht eine Zonenform nach Fig. 15 letztlich günstiger ist.

Figur 17 zeigt innerhalb einer Gewebebahn 2 aufeinander folgende Zuschnittsflächen 85 mit gasdurchlässigen Zonen 95 und 95a, und zwar jeweils mehrere derartige gasdurchlässige Zonen 95 in Bahnlängsrichtung innerhalb eines Zuschnittes. Tritt bei einer Anordnung nach Figur 15 ein Gewebefehler auf, so muß ein Teil der Gewebebahn ungenutzt bleiben, nämlich in Bahnlängsrichtung so viel, wie eine der Zuschnittsflächen einnimmt. Bei einer Anordnung nach Fig. 12 bis 14 muß in diesem Falle ein Teil der Gewebebahn ungenutzt bleiben, der mindestens der Hälfte der Längsrichtung eines der Zuschnitte entspricht. Nach Figur 17 braucht nur ein so kleiner Teil der Gewebebahn ungenutzt zu bleiben, wie der Verschiebung um z. B. einen Abstand zwischen zwei gasdurchlässigen Zonen entspricht.

In Figur 18 ist dies rechts dargestellt. Man hat dort den rechten Zuschnitt 86 gegenüber dem mittleren Zuschnitt 86 nur um eine der gasdurchlässigen Zonen 96 verschieben müssen. Das Ausmaß der Verschiebung läßt sich dem Ausmaß des Gewebefehlers anpassen. Es entsteht also durch eine Anordnung nach Figur 17 oder 18 nur wenig Verlust beim Auftritt eines Gewebefehlers.

Die gasdurchlässigen Zonen 95 lassen sich mit einer Schaftwebmaschine herstellen, die gasdurchlässigen Zonen 96 mit einer Jacquard- Einrichtung.

Airbags lassen sich auch aus Kunststoff- Folie anstelle von textilen Geweben herstellen. Dies hat besonders für den Fall Bedeutung, daß von neueren Gasgeneratoren Gase niedriger Temperatur abgegeben werden, so daß die Gefahr eines Schmelzens der Kunststoff- Folie nicht besteht. Auch Kunststoff-Folien müssen mit gasdurchlässigen Zonen ausgerüstet werden. Diese Zonen entstehen durch Ausstanzen oder Einbrennen von Löchern.

Die Zuschnitte aus Kunststoff-Folien werden vorzugsweise zusammengeklebt oder - geschweißt.

### BEZUGSZEICHEN

- 2: Gewebebahn
- 18: Aufprallfläche
- 20: Anschlußöffnuung
- 40: Airbag
- 41: Zuschnitt
- 42a1, 42a2: äußere Faltkante
- 42i1, 42i2, 42i': innere Faltkante
- 45: Naht
- 44, 44', 46: Rand (Nährand)
- 47, 48, 49: Abschnitt
- 50: Zuschnitt
- 50a: äußere Faltkante
- 52i: innere Faltkante
- 53: Naht
- 54, 54': Abschnitt
- 55: Ecke
- 56: Rand (Nährand)
- 57: Schirmgebilde
- 58: Naht
- 60: Anschlußöffnung
- 62: Flügel
- 63: Anschlußöffnung
- 64: Rand (Nährand)
- 66a: äußere Faltkante
- 66i: innere Faltkante
- 68: Zuschnitt
- 70: gasdurchlässige Zone
- 72: Aufprallfläche
- 80 bis 86: Zuschnittsfläche
- 90 bis 96: gasdurchlässige Zone

- a: Abstand

## Patentansprüche

1. Airbag mit folgenden Merkmalen:
a) der Airbag ist herstellbar aus einem einzigen, insbesondere einstückigen ***Zuschnitt*** (41, 80 bis 86), der aus Textilmaterial oder Kunsstoff- Folie besteht,
b) Teile des Zuschnitts sind um ***Falkanten*** (42i1, 42a1, 42i', 42a2, 42i2) in einander dicht benachbarte, parallele Ebenen faltbar,
c) die Faltkanten durchqueren den Zuschnitt vollständig,
d) jeweils zwei ***Abschnitte*** (47, 48) des Zuschnitts sind zu einer Außenfaltkante (42a1 bzw. 42a2) ***spiegelbildlich*** und haben nach dem Falten in übereinanderliegende Ebenen übereinanderliegende, miteinander zu verbindende ***Ränder*** (44 bzw. 46),
e) ***wobei Innenfaltkanten*** und ***Außenfaltkanten*** (42i1, 42a1, 42i', 42a2, 42i2) einander abwechseln,
dadurch **gekennzeichnet,**
f) daß einander benachbarte Faltkanten (42i1, 42a1, 42i', 42a2, 42i2) miteinander ***spitze Winkel*** einschließen.

2. Airbag mit folgenden Merkmalen:
a) der Airbag ist herstellbar aus einem einzigen, insbesondere einstückigen ***Zuschnitt*** (50, 68) der aus Textilmaterial oder Kunsstoff- Folie besteht,
b) Teile des Zuschnitts sind um ***Faltkanten*** (52a, 52i, 66a, 66i) in einander dicht benachbarte, parallele Ebenen faltbar,
c) die Faltkanten durchqueren den Zuschnitt vollständig,
d) jeweils zwei ***Abschnitte*** (54) des Zuschnitts sind zu einer Außenfaltkante (52a) ***spiegelbildlich*** und haben nach dem Falten in übereinanderliegende Ebenen übereinanderliegende, miteinander zu verbindende ***Ränder*** (56),
e) wobei ***Innenfaltkanten*** und ***Außenfalkanten*** (52a, 52i, 66a, 66i) einander abwechseln und
f) die beiden Abschnitte (54) beiderseits von Außenfaltkanten (52a, 66a) zueinander spiegelbildliche Formen haben,
dadurch **gekennzeichnet,**
g) daß auch die Abschnitte (54) beiderseits von Innenfaltkanten (52i, 66i) zueinander spiegelbildliche Formen haben und
h) daß einander benachbarte Faltkanten (52a, 52i) miteinander ***spitze Winkel*** einschließen.

3. Airbag nach Anspruch 2, dadurch **gekennzeichnet,** daß der Zuschnitt (50) im wesentlichen die Form eines Quadrats hat, und daß von seinen Faltkanten vier (52i) längs ***Diagonalen*** verlaufen und vier weitere (52a) längs kantenparalleler ***Mittelgeraden.***

4. Airbag nach Anspruch 3, dadurch **gekennzeichnet,** daß der Zuschnitt (68) zur Bildung eines Hohlraumes äußerer Tiefe eingezogene Seitenkanten hat.

5. Airbag nach einem der Ansprüche 1 bis 4, dadurch **gekennzeichnet,** daß
a) eine ***Materialbahn*** (2), aus der die Zuschnitte (80) für die Airbags herauszuschneiden sind, ***gasdurchlässige Zonen*** (90) hat, nämlich Zonen, die aus einem stärker gasdurchlässigen Material bestehen, als der Rest der Materialbahn,
b) daß die Zonen in der Materialbahn (2) so angeordnet sind, daß sie beim fertigen Airbag an Stellen außerhalb der dem Insassen zuzukehrenden ***Aufprallfläche*** (18) liegen und
c) daß jede gasdurchlässige Zone die Form eines in Materialbahnlängs- oder - querrichtung verlaufenden ***Streifens*** (90) hat.

6. Airbag nach einem der Ansprüche 1 bis 4, dadurch **gekennzeichnet,** daß
a) eine Materialbahn (2), aus der die Zuschnitte (80 bis 82) für die Airbags herauszuschneiden sind, gasdurchlässige Zonen (90 bis 92) hat, nämlich Zonen, die aus einem stärker gasdurchlässigen Material bestehen, als der Rest der Materialbahn,
b) daß die Zonen in der Materialbahn (2) so angeordnet sind, daß sie beim fertigen Airbag an Stellen außerhalb der dem Insassen zuzukehrenden Aufprallfläche (18) liegen,
c) daß in Längsrichtung der Materialbahn zwei oder drei zueinander parallele Reihen von miteinander verschachtelten Zuschnittsflächen untergebracht sind und
b) daß die Zonen aller Reihen beiderseits von Längsachsen der Materialbahn spiegelbildlich zueinander angeordnet sind.

7. Airbag nach Anspruch 5 oder 6, dadurch **gekennzeichnet,** daß die Zonen innerhalb einer Zuschnittsfläche und zwischen zwei Zuschnittsflächen in Längsrichtung der Materialbahn gleiche gegenseitige Abstände ***a*** haben.

8. Airbag nach Anspruch 6 oder 7, dadurch **gekennzeichnet,**
a) daß die Materialbahn (2) in ihrer Längsrichtung aufeinanderfolgende gleiche Zonen (95, 96) hat, von denen mehr als eine innerhalb einer Zuschnittsfläche (85, 86) derart unterzubringen ist, daß zwischen den Rändern der Zonen und den Rändern der Zuschnittsflächen Sicherheitsabstände verbleiben und
b) daß auch bei einem Teilrapport- Vorschub Zonen der vorgesehenen Anzahl und Anordnung unter Einhaltung der Sicherheitsabstände innerhalb einer Zuschnittsfläche unterzubringen sind.

9. Airbag nach einem der Ansprüche 5 bis 8 dadurch **gekennzeichnet,**
a) daß die Materialbahn aus einem ***textilen Gewebe*** besteht,
b) daß ihr Hauptteil eine dichte Bindung, insbesondere eine Leinwandbindung hat und
c) daß die Zonen eine lockerere Bindung, insbsondere eine Köperbindung haben.

10. Airbag nach einem der Ansprüche 5 bis 8, dadurch **gekennzeichnet,**
a) daß die Materialbahn aus *Kunststoff- Folie* besteht und
b) daß zur Bildung der Zonen Löcher ausgestanzt oder eingebrannt sind.

11. Airbag nach Anspruch 10, dadurch **gekennzeichnet,** daß die *Kunststoff- Folie* verstärkt ist, insbesondere durch Kunststoff- Fäden oder durch Glasfasern.

12. ***Verfahren*** zum Herstellen eines Airbags nach einem der Ansprüche 2 bis 4, dadurch **gekennzeichnet,**
a) daß der Zuschnitt zu einem Schirmgebilde (57) nach Art eines geschlossenen Schirmes gefaltet wird, wobei die Innenfaltkanten (52i) den Stäben des Schirms entsprechen und die durch Außenfaltkanten (52a) verbundenen Abschnitte (54) nach außen vorstehen,
b) daß jeweils zwei einer Außenfaltkante (52a) benachbarte Abschnitte (54) eben aufeinandergelegt werden und
c) daß ihre freien Ränder (56) miteinander ***verbunden*** werden.

13. Verfahren nach Anspruch 12, dadurch **gekennzeichnet,**
a) daß der Zuschnitt vor dem Verbinden der ersten beiden (einander benachbarten) Ränder (56) noch nicht vollständig zu dem Schirmgebilde (57) gefaltet wird,
b) derart, daß vier einander benachbarte und zwischen zwei Innenfaltkanten (66i) liegende Abschnitte (54) in zwei dicht übereinander liegenden Ebenen angeordnet sind,
c) daß ihre Ränder (64) miteinander verbunden werden, während dabei alle übrigen Abschnitte (54') noch quer abstehen und zueinander im wesentlichen parallel verlaufen,
d) daß die erstgenannten Abschnitte (54) miteinander zuerst verbunden werden, die quer abstehenden (54') anschließend oder in umgekehrter Reihenfolge, oder daß alle Abschnitte gleichzeitig miteinander vernäht werden.

## Claims

1. An air bag having the following features:
a) the air bag is produceable from a single, particularly one-piece ***cutting*** (41*,* 80 to 86) comprising textile material or plastics film,
b) parts of said cutting are foldable about ***folding edges*** (42i1,42a1,42i',42a2,42i2) in parallel planes closely juxtaposed,
c) said folding edges fully encompass the width of said cutting,
d) two ***sections*** (47, 48) each of said cutting are ***mirror-inverse*** about an outer folding edge (42a1 and 42a2 resp.) and have, after folding, ***edges*** (44 and 46 resp.) in planes located one above the other for joining to each other,
e) said ***inner folding edges*** and said ***outer folding edges*** (42i1,42a1, 42i',42a2, 42i2) alternating,
**characterized** in that
f) said juxtaposed folding edges (42i1,42a1,42i',42a2,42i2) cover ***acute angles*** with respect to each other.

2. An air bag having the following features:
a) it being produceable from a single, particularly one-piece ***cutting*** (50,68) comprising textile material or plastics film,
b) parts of said cutting being foldable about ***folding edges*** (52a, 52i, 66a, 66i) in parallel planes closely juxtaposed,
c) said folding edges fully encompassing the width of said cutting
d) two ***sections*** (54) each of said cutting being ***mirror-inverse*** about an outer folding edge (52a) and have, after folding, ***edges*** (56) in planes located one above the other for joining to each other,
e) said ***inner folding edges*** and said ***outer folding edges*** (52a, 52i, 66a, 66i) alternating, and
f) both sections (54) having on both sides of said outer folding edges (52a, 66a) shapes which are mirror-inverse to each other,
**characterized** in that
g) also sections (54) on both sides of said inner folding edges (52i, 66i) have shapes which are mirror-inverse to each other, and
h) that juxtaposed folding edges (52a, 52i) cover ***acute angles*** with respect to each other.

3. The air bag as set forth in claim 2, **characterize**d in that said cutting (50) has essentially the shape of a square from the folding edges of which four (52i) longitudinal ***diagonals*** and four further (52a) longitudinal ***middle straight lines*** oriented parallel to the edges extend.

4. The air bag as set forth in claim 3, **characterized** in that said cutting (68) has recessed side edges to form a cavity of greater depth.

5. The air bag as set forth in any of the claims 1 to 4, **characterized** in that
a) a ***material web*** (2) from which the cuttings (80) are to be cut out for the air bags, has ***gas-permeable zones*** (90), namely zones comprising a material which is more permeable to gas than the remainder of the web,
b) said zones are arranged in the said material web (2) such that they are located in the finished air bag at positions outside of the ***impact surface*** (18) to be faced to the occupant, and
c) each gas-permeable zone has the shape of a ***strip*** (90) oriented in the longitudinal or transverse direction of said material web.

6. The air bag as set forth in any of the claims 1 to 4, **characterized** in that
a) a material web (2) from which the cuttings (80 to 82) are to be cut out for the air bags has gas-permeable zones (90 to 92), namely zones comprising a material which is more permeable to gas than the remainder of the material web,
b) said zones are arranged in the said material web (2) such that they are located in the finished air bag at positions outside of the impact surface (18) to be faced to the occupant,
c) in the longitudinal direction of the material web two or three rows of nested cutting surfaces are accommodated in parallel to each other and that
d) the zones of all rows are arranged mirror-inversely to each other each on both sides of the longitudinal axes of the material web.

7. The air bag as set forth in claim 5 or 6, **characterized** in that said zones are equispaced by ***a*** within a cutting surface and between two cutting surfaces in the longitudinal direction of the material web.

8. The air bag as set forth in claim 6 or 7, **characterized** in that
a) said material web (2) has in its longitudinal direction equal zones in sequence (95, 96) of which more than one is to be accommodated within a cutting surface (85, 86) so that between the edges of said zones and the edges of said cutting surfaces safety margins remain and that
b) even in the case of a partial repeat advance zones are to be accommodated in the provided number and arrangement whilst keeping to the safety margins within a cutting surface.

9. The air bag as set forth in any of the claims 5 to 8, **characterized** in that
a) said material web comprises a ***textile fabric,***
b) the major portion thereof has a dense weave,
particularly a plain weave and that c) said zones have a less dense weave, particularly a twilled weave.

10. The air bag as set forth in any of the claims 5 to 8, **characterized** in that
a) said material web comprises a ***plastics film*** and that
b) holes are stamped or burnt out to form said zones.

11. The air bag as set forth in claim 10, **characterized** in that said plastics film is reinforced, particularly by plastics threads or by glass fibers.

12. A ***method*** of producing an air bag as set forth in any of the claims 2 to 4, **characterized** in that
a) said cutting is folded into an umbrella configuration (57) to form a kind of closed umbrella, the inner folding edges (52i) corresponding to the ribs of said umbrella and the sections (54) joined by the outer folding edges (52a) protruding outwards,
b) two each of said sections (54) neighboring an outer folding edge (52a) are placed flat on each other and
c) its free edges (56) are ***joined*** together.

13. A method of producing an air bag as set forth in claim 12, **characterized** in that
a) said cutting is yet to be fully folded to form the umbrella configuration (57) before the first two (juxtaposed) edges (56) are joined,
b) so that four juxtaposed sections (54) located between two inner folding edges (66i) are arranged in two planes closely located the one on the other,
c) the edges thereof (64) are joined to each other, whilst all remaining sections (54') still protrude crosswise and are oriented essentially parallel to each other,
d) said first-mentioned sections (54) are first joined to each other, then said crosswise protruding sections (54'), or vice-versa, or all sections are stitched to each other at the same time.

## Revendications

1. Coussin gonflable présentant les caractéristiques suivantes :
a) le coussin gonflable est réalisable à partir d'une seule coupe (41, 80 à 86), notamment en une pièce, qui consiste en un matériau textile ou en un film plastique,
b) des parties de la coupe peuvent être pliées autour d'arêtes de pliage (42i1, 42a1, 42i', 42a2, 42i2) en plans parallèles en disposition réciproque voisine serrée,
c) les arêtes de pliage traversent intégralement la coupe,
d) les sections (47, 48) de la coupe sont par deux symétriques par rapport à une arête de pliage extérieure (42a1 et 42a2) et présentent après le pliage en plans superposés des bords superposés à relier entre eux (44 et 46),
e) les arêtes intérieures et les arêtes extérieures (42i1, 42a1, 42i', 42a2, 42i2) s'alternant,
caractérisé en ce que
f) des arêtes de pliage (42i1, 42a1, 42i', 42a2, 42i2) voisines renferment entre elles des angles aigus.

2. Coussin gonflable présentant les caractéristiques suivantes :
a) le coussin gonflable est réalisable à partir d'une seule coupe (50, 68) qui consiste en un matériau textile ou en un film plastique,
b) des parties de la coupe peuvent être pliées autour d'arêtes de pliage (52a, 52i, 66a, 66i) en plans parallèles en disposition réciproque voisine serrée,
c) les arêtes de pliage traversent intégralement la coupe,
d) les sections (54) de la coupe sont par deux symétriques par rapport à une arête de pliage extérieure (52a) et présentent après le pliage en plans superposés des bords superposés à relier entre eux (56),
e) les arêtes intérieures et les arêtes extérieures (52a, 52i, 66a, 66i) s'alternant, et
f) les deux sections (54) présentant des deux côtés d'arêtes de pliage extérieures (52a, 66a) des formes réciproquement symétriques,
caractérisé en ce que
g) les sections (54) des deux côtés d'arêtes de pliage intérieures (52i, 66i) présentent également des formes réciproquement symétriques, et
h) des arêtes de pliage (52a, 52i) voisines renferment ensemble des angles aigus.

3. Coussin gonflable selon la revendication 2, caractérisé en ce que la coupe (50) présente essentiellement la forme d'un carré et que de ses arêtes de pliage quatre (52i) s'étendent le long de diagonales et quatre autres (52a) le long de droites médianes parallèles aux arêtes.

4. Coussin gonflable selon la revendication 3, caractérisé en ce que la coupe (68) présente des arêtes latérales rentrées pour former une cavité d'une profondeur assez importante.

5. Coussin gonflable selon l'une quelconque des revendications 1 à 4, caractérisé en ce que
a) une bande de matériau (2) à partir de laquelle les coupes (80) sont découpées pour le coussin gonflable présente des zones perméables au gaz (90), à savoir des zones qui consistent en un matériau plus perméable au gaz que le reste de la bande de matériau,
b) les zones dans la bande de matériau (2) sont disposées de sorte que lorsque le coussin gonflable est fini, elles se trouvent à des endroits en dehors de la surface d'impact (18) à diriger vers l'occupant et
c) chaque zone perméable au gaz présente la forme d'une bande (90) s'étendant dans le sens de la longueur ou dans le sens de la largeur de la bande de matériau.

6. Coussin gonflable selon l'une quelconque des revendications 1 à 4, caractérisé en ce que
a) la bande de matériau à partir de laquelle les coupes (80 à 82) pour le coussin gonflable sont à découper présente des zones perméables au gaz (90 à 92), à savoir des zones qui consistent en un matériau plus perméable au gaz que le reste de la bande de matériau,
b) les zones dans la bande de matériau (2) sont disposées de sorte que lorsque le coussin gonflable est fini, elles se trouvent à des endroits en dehors de la surface d'impact (18) à diriger vers l'occupant et
c) en direction longitudinale de la bande de matériau sont prévues deux ou trois rangées réciproquement parallèles de surfaces de coupe imbriquées l'une dans l'autre et
d) les zones de toutes les rangées sont disposées réciproquement en symétrie des deux côtés d'axes longitudinaux de la bande de matériau.

7. Coussin gonflable selon les revendications 5 ou 6, caractérisé en ce que les zones à l'intérieur d'une surface de coupe et entre deux surfaces de coupe présentent en direction longitudinale de la bande de matériau des distances a réciproques identiques.

8. Coussin gonflable selon les revendications 6 ou 7, caractérisé en ce que
a) la bande de matériau (2) présente dans sa direction longitudinale des zones successives identiques (95, 96) dont plus d'une doit être intégrée à l'intérieur d'une surface de coupe (85, 86) de manière à ce qu'entre les bords des zones et les bords des surfaces de coupe il reste des distances de sécurité et
b) même s'il y a décalage d'un rapport partiel, les zones peuvent être placées en nombre et en disposition prévus et en respectant les distances de sécurité à l'intérieur d'une surface de coupe.

9. Coussin gonflable selon l'une quelconque des revendications 5 à 8, caractérisé en ce que
a) la bande de matériau consiste en un tissu textile,
b) sa partie principale présente une armure dense, notamment une armure-toile et
c) les zones présentent une armure souple, notamment une armure sergée.

10. Coussin gonflable selon l'une quelconque des revendications 5 à 8, caractérisé en ce que
a) la bande de matériau consiste en un film plastique et
b) pour former les zones, des trous sont poinçonnés ou brûlés.

11. Coussin gonflable selon la revendication 10, caractérisé en ce que le film plastique est renforcé notamment de fils plastiques ou de fibres de verre.

12. Procédé pour la fabrication d'un coussin gonflable selon l'une quelconque des revendications 2 à 4, caractérisé en ce que
a) la coupe est pliée pour constituer une forme en parapluie (57) à la manière d'un parapluie fermé, les arêtes de pliage intérieures (52i) correspondant aux baleines du parapluie et les sections (54) reliées par les arêtes de pliage extérieures (52a) dépassant vers l'extérieur,
b) les deux sections (54) voisines d'une arête de pliage extérieure (52a) sont superposées à plat et
c) leurs bords libres (56) sont reliés entre eux.

13. Procédé selon la revendication 12, caractérisé en ce que
a) la coupe n'est pas encore intégralement pliée en forme de parapluie (57) avant que les deux premiers bords (56) (voisins l'un de l'autre) soient reliés de manière à ce que
b) quatre sections (54) réciproquement voisines et situées entre deux arêtes de pliage intérieures (66i) sont disposées en deux plans serrés superposés,
c) leurs bords (64) sont reliés entre eux alors que toutes les autres sections (54') dépassent encore transversalement et s'étendent substantiellement et réciproquement en parallèle,
d) les sections (54) citées en premier sont d'abord reliées entre elles, ensuite les sections dépassant transversalement (54') sont reliées entre elles, ou en ordre inversé, ou toutes les sections sont cousues ensemble simultanément.
